# EUROPÄISCHE PATENTSCHRIFT

(11) **EP 0 969 618 B1**
(45) Veröffentlichungstag und Bekanntmachung des Hinweises auf die Patenterteilung: **02.08.2006**
(21) Anmeldenummer: 99111320.0
(22) Anmeldetag: 08.06.1999
(51) Int. Cl.: H04J 14/02

(54) **Optisches 2-Faser-Ringnetz**
Optical two-fibre ring network
Réseau optique en anneau à deux fibres

(30) Priorität: 29.06.1998 DE 19828973
(43) Veröffentlichungstag der Anmeldung: 05.01.2000
(73) Patentinhaber: SIEMENS AKTIENGESELLSCHAFT, 80333 München (DE)
(72) Erfinder: Rettenberger, Stephan, 80337 München (DE); Fischer, Uwe, 81479 München (DE); Schukat, Horst, D-82031 Grünwald (DE)

(56) Entgegenhaltungen:
- EP-A- 0 716 521
- EP-A- 0 920 153
- US-A- 5 159 595
- RAMOS A J: "OPTICAL NETWORK ARCHITECTURE: ROUTING AND PROTECTION" OADM WORKSHOP, XX, XX, 23. April 1998 (1998-04-23), Seiten 45-49, XP000667423
- TSONG-HO WU ET AL: "A CLASS OF SELF-HEALING RING ARCHITECTURES FOR SONET NETWORK APPLICATIONS" IEEE TRANSACTIONS ON COMMUNICATIONS, IEEE INC. NEW YORK, US, Bd. 40, Nr. 11, 1. November 1992 (1992-11-01), Seiten 1746-1756, XP000336312 ISSN: 0090-6778

## Beschreibung

Die Erfindung betrifft ein optisches 2-Faser-Ringnetz für Wellenmultiplexsysteme mit mehreren Add-Drop-Multiplexer-Terminals.

Optische Netze werden häufig als Ringnetze konzipiert, um bei Störungen des regulären Übertragungsweges einen Ersatzweg zur Verfügung zu haben. Aus dem Aufsatz Multiwavelength Survivable Ring Network Architectures, A.F. Elrefaie, Bellcore, Red Bank, NJ 07701, USA, 0-7803-0950-2/931993IEEE, Seite 1245 bis 1251 sind solche Ringarchitekturen für ein Wellenlängenmultiplexsystem bekannt.

Aus der europäischen Patentanmeldung EP 0716 521 A2 ist ein mit zwei Fasern realisiertes Ringnetz beschrieben. Die Duplexverbindung zwischen zwei Knoten, beispielsweise zwischen den Knoten 2B und 2C erfolgt über beide Fasern und über zwei unterschiedliche Wellenlängen λ1 und λ2 über den selben Abschnitt (2B - 2C) des Ringnetzes. Dieselben Wellenlängen werden hier auch für die Verbindung zwischen jeweils allen anderen benachbarten Knoten verwendet; eine direkte Verbindung zwischen nicht benachbarten Knoten über durchgängige Wellenlängenkanäle ist nicht vorgesehen. Im Störungsfall, beispielsweise zwischen den Knoten 2B und 2C, wird Wellenlängenkanal, über den Daten der Station 2C ausgesendet werden, über den nicht gestörten Teil des Ringes, d. h. über die Knoten 2D, 2E, 2F, 2A übertragen, indem er in eine Faser 3A des ungestörten Teils des Ringes zusätzlich zu dem ohnehin genutzten Wellenlängenkanal λ1 eingespeist und in entgegengesetzter Richtung übertragen wird. Das entsprechende Sendesignal des Knotens 2B, das bisher über die Faser 3A zum Knoten 2C übertragen wurde, wird entsprechend in die Faser 3B zusätzlich eingespeist und zum Knoten 2C übertragen. Die Übertragung zwischen den Knoten 2B und 2C erfolgt wieder bidirektional über den ungestörten Teil des Ringes. Bei einem solchen bidirektionalen 2-Faser-Ring erfolgt der Datenaustausch zwischen zwei Knoten jeweils über 2 Fasern. Die bedingt bei realen Netzen einen hohen Verwaltungsaufwand. Außerdem darf kein Ring ausfallen bzw. abgeschaltet sein, wenn die Verbindung nicht vollständig ausfallen soll.

In den Ringnetzen sind häufig sogenannte Add-Drop-Multiplexer vorgesehen, die zum Abzweigen und Einfügen von Übertragungskanälen dienen. Diese Funktionen wurden bisher mit elektrischen Signalen realisiert. Zukünftig sollen diese Funktionen aber optisch arbeitende Koppelfelder übernehmen, die in Ringstrukturen eingesetzt werden, die mit wenig Aufwand realisiert werden sollen und Protection-Schaltungen (Ersatz-Schaltungen) aufweisen sollen.

Ein diese Bedingungen erfüllendes Ringnetz ist in Anspruch 1 angegeben.

Vorteilhafte Weiterbildungen sind in den Unteransprüchen beschrieben.

Der besondere Vorteil dieses Ringnetzes mit selbstständigen unidirektionalen Ringen besteht darin, daß jeder (einem Teilnehmer zugeordneten) Leitungsbaugruppe eine spezielle Wellenlänge sowohl für die abgehenden Signale als auch für die empfangenen Signale zugeordnet ist, die zur Übertragung sowohl in den Working-Wellenlängenkanälen des Ringnetzes als auch in den Protection-Wellenlängenkanälen beibehalten wird. Die Umschaltung zwischen ungestörtem und Protection-Betrieb erfolgt über einfache optische Schalteinrichtungen.

Ein Ausführungsbeispiel der Erfindung wird anhand von Figuren näher beschrieben.

Es zeigen:
- Figur 1: das Prinzip eines erfindungsgemäßen Ringnetzes,
- Figur 2: die Übertragungswege bei einer unterbrochenen Lichtleitfaser,
- Figur 3: die Übertragungswege bei zwei unterbrochenen Lichtleitfasern,
- Figur 4: das Prinzipschaltbild eines Terminals und
- Figur 5: ein Ausführungsbeispiel eines Terminals.

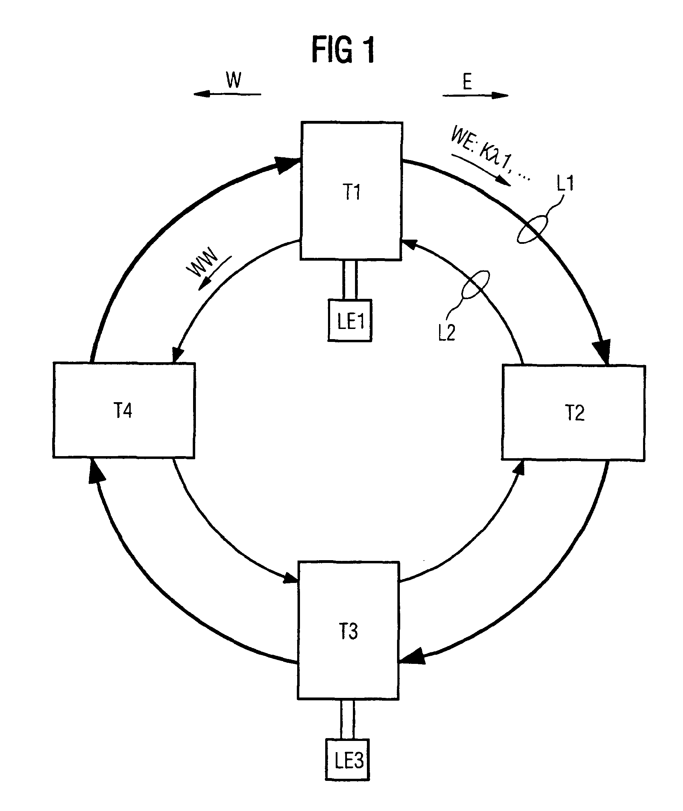

**Figur 1** zeigt ein erfindungsgemäßes Ringnetz mit zwei Lichtleitfasern L1 und L2. Die Working-Verbindungen zwischen den Terminals erfolgen über eine Vielzahl von Working-Wellenlängenkanälen WW und WE, die jeweils einer bestimmten Wellenlänge zugeordnet sind. Beispielsweise empfängt das Terminal T3 über einen der Working-Wellenlängenkanäle-Ost WE, dem Datenkanal Kλ1, Daten vom Terminal T1. Das Terminal T1 empfängt beispielsweise über den anderen Teil des Ringabschnitt über den "gleichen" Datenkanal Kλ1 (es wird dieselbe Wellenlänge zur Übertragung anderer Daten verwendet) Daten vom Terminal T3, koppelt diese aus und kann im selben Datenkanal neue Daten zum Terminal T2 senden. Dieser Datenkanal wird jeweils bei den nicht von der Datenübertragung betroffenen Terminals T2 und T4 durchgeschleift.

Entsprechend werden Daten über Working-Wellenlängenkanäle-West WW in entgegengesetzter Richtung übertragen. Die Terminals sind somit durch zwei unidirektionale Ringe miteinander verbunden. Jedes an ein Terminal angeschlossene Leitungsendgeräte, z.B. LE1 und LE31 (es sind meist mehrere Leitungsendgeräte angeschaltet), ist folglich mit einem anderen Leitungsendgerät ebenfalls über einen der beiden Ringe duplexmäßig verbunden. Über weitere jeweils einer anderen Wellenlängen zugeordneten Kanäle sind sowohl über die erste Lichtleitfaser L1 als auch über die zweite Lichtleitfaser L2 weitere Terminals bzw. Leitungsendgeräte miteinander verbunden sein.

Die über die erste Lichtleitfaser L1 übertragenen Working-Wellenlängenkanäle WE sind einem ersten, z.B. höheren/"blauen" Übertragungsband, kleinere Wellenlängen, zugeordnet, während die über die zweite Lichtleitfaser L2 übertragenen Working-Wellenlängenkanäle WW größere Wellenlängen aufweisen und einem zweiten "roten" Übertragungsband zugeordnet sind. Auch sind Übertragungsbänder denkbar (aber wenig zweckmäßig), bei denen die einzelnen Wellenlängenkanäle "wellenlängenmäßig" verschachtelt sind.

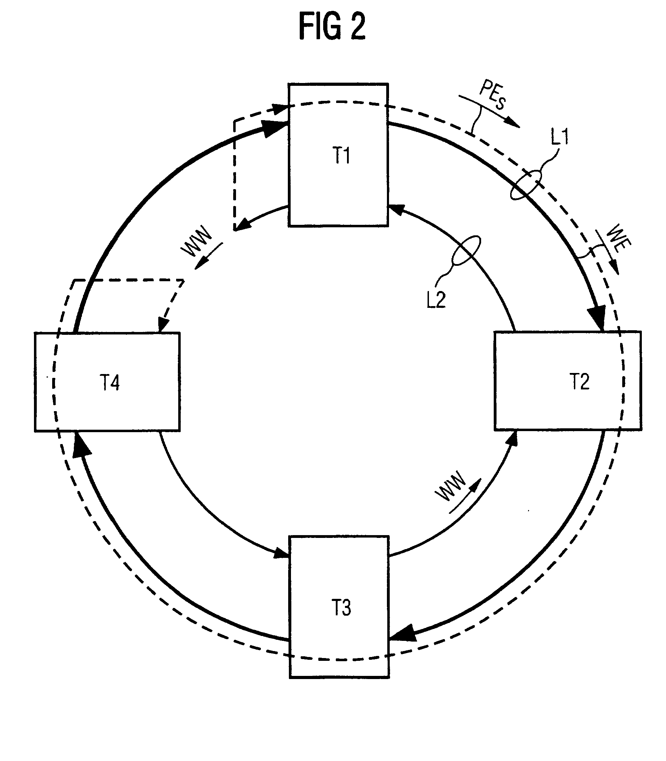

In **Figur 2** ist die zweite Lichtleitfaser L2 zwischen dem Terminal T1 und dem Terminal T4 gebrochen. Die Protection-Verbindung (Ersatzverbindung), die alle auf der Lichtleitfaser 2 übertragenen Wellenlängenkanäle umfaßt, wird nun über die erste Lichtleitfaser L1 und den intakten Teil des Ringes zum Terminal T4 geschaltet. Die bisher entgegen dem Uhrzeigersinn in Richtung Westen W vom Terminal T1 im roten Übertragungsband ausgesandten Working-Wellenlängenkanäle WW werden nun umgelenkt und als Protection- Wellenlängenkanäle PEₛ in die erste Lichtleitfaser L1 eingespeist und weiterhin im roten Übertragungsband aber jetzt im Uhrzeigersinn über den intakten Teil des Ringnetzes übertragen. Da das rote Übertragungsband auf der Lichtleitfaser L1 bisher frei war, kollidieren die nun zusätzlich im roten Übertragungsband übertragenen Daten nicht mit denen des blauen Übertragungsbandes. Das rote Übertragungsband wird durch die Terminals T2 und T3 durchgeschleift. Um die Übersichtlichkeit in der Darstellung zu erhalten, wurde die Ersatzschaltung in Figur 2 nur für einen Kanal dargestellt, der Daten für das Terminal T4 transportiert. Die übrigen Wellenlängenkanäle werden über das Terminal T4 wieder in das rote Übertragungsband WW eingespeist. Die als Ergänzung der Bezugszeichen verwendeten Indizes "s" dienen zur Kennzeichnung, daß diese Signale als Protection-Signale ausgesendet werden.

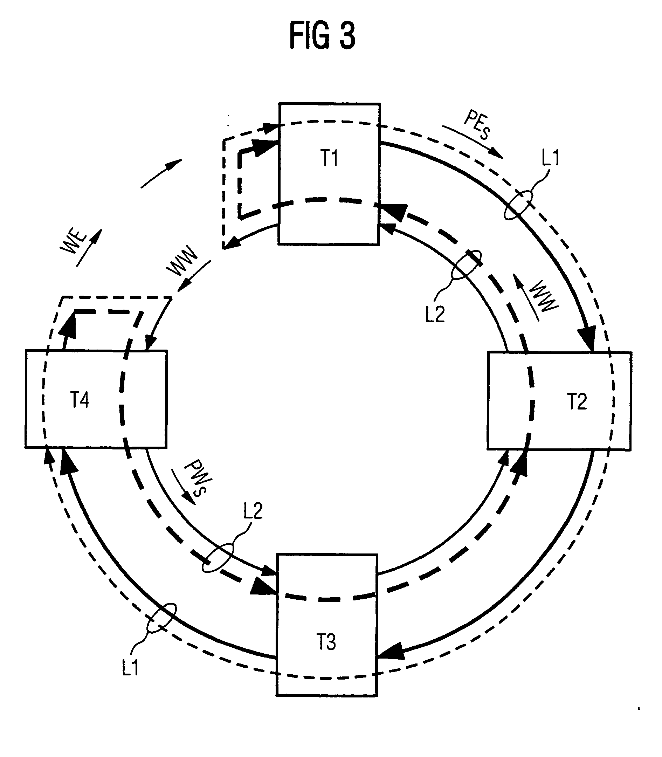

**Figur 3** zeigt den Fall, daß beide Lichtleitfasern L1 und L2 zwischen den Terminals T1 und T4 unterbrochen (gestört) sind. Die nun nicht mehr über diese Strecke übertragbaren Working-Wellenlängenkanäle WW und WE werden nun jeweils umgelenkt und als Protection- Wellenlängenkanäle PEₛ bzw. PWₛ jeweils in die andere Lichtleitfaser eingespeist und über den intakten Teil des Ringnetzes übertragen, wobei sie durch die Terminals T2 und T3 durchgeschleift werden.

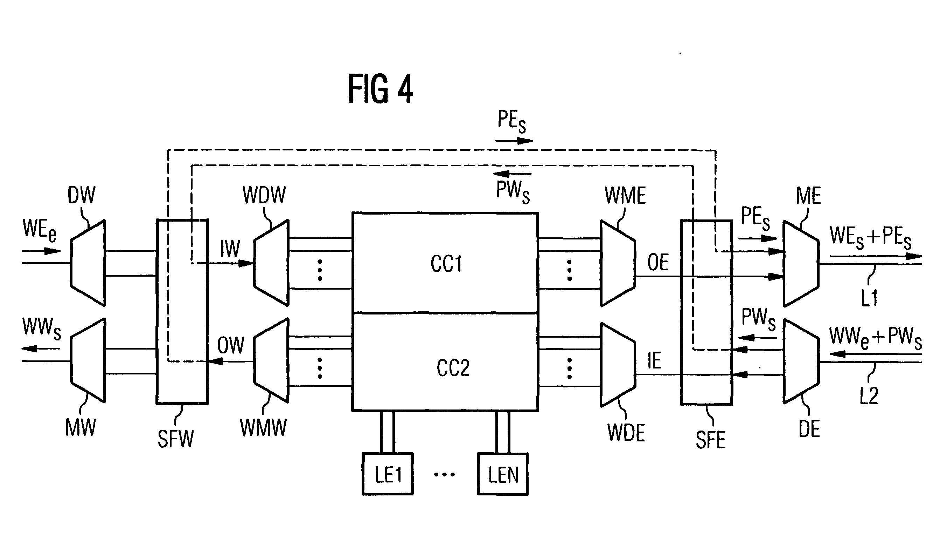

**Figur 4** zeigt ein Prinzipschaltbild des Terminals T1. Es enthält zwei Koppelfeldern CC1 und CC2, die im ungestörten Betriebsfall jeweils ein Wellenlängen-Multiplexsignal, die Working- Wellenlängenkanäle WWₑ bzw. WEₑ, empfangen und jeweils ein Wellenlängen-Multiplexsignal WWₛ bzw. WEₛ aussenden (für die empfangenen Signale ist hier zusätzlich als Index e hinzugefügt, die Signale entsprechen jedoch den bisher mit ansonsten gleichen Bezugszeichen versehenen Signalen).

Die empfangenen Multiplexsignale werden zunächst in Leitungsdemultiplexern DE und DW in Working- Wellenlängenkanäle WWₑ (bzw. WEₑ) und in Protection- Wellenlängenkanäle PWₑ (PEₑ) geteilt, die jeweils einem optisches Schaltfeld SFE (SFW) zugeführt werden. Die Working- Wellenlängenkanäle oder Protection- Wellenlängenkanäle, beispielsweise WWₑ oder PWₑ, werden einem Wellenlängen-Demultiplexer WDE (WDW) zugeführt und von diesem in unterschiedlichen Wellenlängen aufweisende Kanäle aufgeteilt.

Im ungestörten Betrieb werden die einzelnen Kanäle von den Koppelfeldern CC1, CC2 entweder durchgeschaltet oder an Leitungsendgeräte LE1, ..., LEN abgezweigt. In derselben Weise werden von den Leitungsendgeräte abgegebenen Signale über die Koppelfelder in Wellenlängen-Multiplexern MW und ME zu Wellenlängen-Multiplexsignalen zusammengefaßt und ausgesendet.

Die abzuzweigenden einzufügenden Signale jedes Leitungsendgerätes werden nur in einem Koppelfeld durchgeschaltet.

Sind, wie in Figur 3, aber die westlichen Anschlüsse des Terminals T1 gestört, dann müssen die in der Richtung W über den Ausgang OW des Koppelfeldes CC2 auszusendenden Working-Signale WWₛ über das Schaltfeld SFW und das Schaltfeld SFE über den Ausgang OE eines Leitungsmultiplexers Ost ME als Protection-Signale PEₛ in die Lichtleitfaser L1 eingekoppelt werden.

Aufgrund der Störung können aus der Richtung W auch keine Signale WEₑ mehr empfangen werden. Diese Empfangssignale werden jedoch entsprechend Figur 3 vom Terminal T4 als Protection-Signal PWₛ ausgesendet und gelangen über die Lichtleitfaser L2 über das ungestörte Ringsegment zu einem Leitungsdemultiplexer DE. Von dort werden sie über die Schaltfelder SFE und SFW nun an den Eingang IW des Wellenlängen-Demultiplexer WDW geführt, an dem bisher auch die identischen Working-Signale empfangen wurden (die Bezeichnung der Ein- und Ausgänge der übrigen Wellenlängen-Demultiplexer und Wellenlängen-Multiplexer ist entsprechend gewählt). Die Protection-Verbindungen sind strichliert dargestellt.

Wie aus Figur 4 ersichtlich ist, können prinzipiell auch jeweils die Leitungsmultiplexer und die Wellenlängen-Multiplexer bzw. die Leitungsdemultiplexer und die Wellenlängen-Demultiplexer zusammengefaßt werden und die Schaltfelder als Teil des Koppelfeldes realisiert werden.

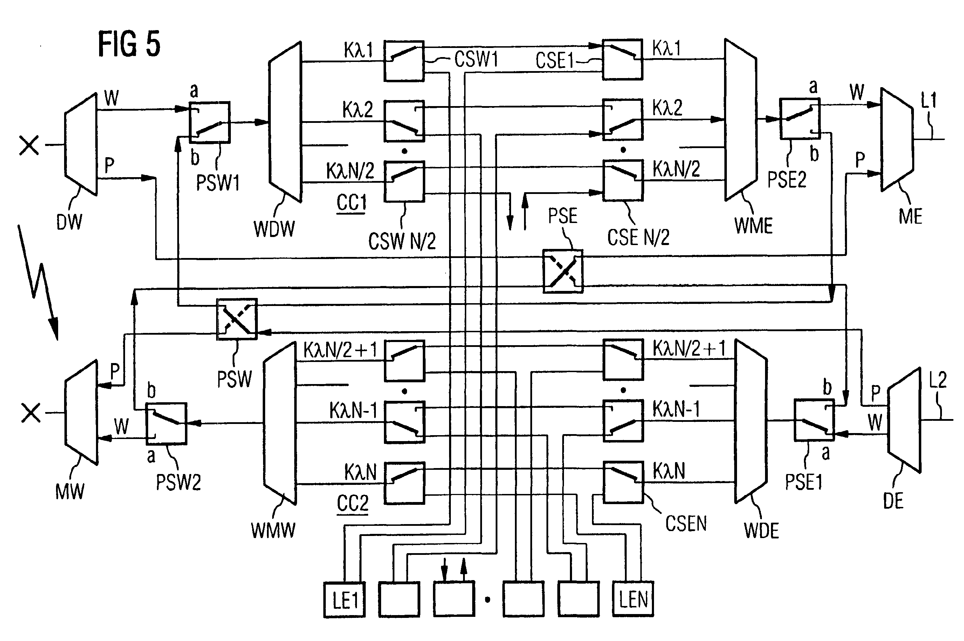

In **Figur 5** sind wesentliche Einzelheiten des Terminals dargestellt. Über Protection-Schalter PSW1, PSE1 und PSW, PSE (Teile des Schaltfeldes SFW) können entweder die Working-Ausgänge W der Leitungsmultiplexer DW und DE oder aber die Protection-Ausgänge P des Leitungsmultiplexers DE bzw. DW mit dem Eingang des Wellenlängen-Demultiplexers West WDW bzw. des Wellenlängen-Demultiplexers Ost WDE verbunden werden. Dies ermöglicht empfangsseitig die Durchführung einer Protection-Schaltung.

Der Wellenlängen-Demultiplexer West WDW teilt das ihm zugeführte Wellenlängen-Multiplexsignal, das ja sowohl als Worning- als auch als Protection-Signal immer demselben (hier blauen) Übertragungsband entspricht, in verschiedene Wellenlängenkanäle Kλ1 bis Kλ _{N/2} auf. Optische Schalter CSW1 bis CSW_{N/2} des Koppelfeldes CC1 ermöglichen das Durchschalten der einzelnen Wellenlängenkanäle zu weiteren optischen Schaltern CSE1 bis CSE_{N/2}, deren Ausgänge mit dem Wellenlängen-Multiplexer Ost WME verbunden sind und hier zu einem auszusendenden Wellenlängen-Multiplexsignal zusammengefasst werden. Die optischen Schalter CSW1 bis CSW_{N/2} des Koppelfeldes CC1 ermöglichen statt des Durchschaltens der Kanäle Kλ1 bis Kλ_{N/2} auch deren Abzweigung (Drop-Funktion) , während die Schalter CSE1 bis CSE_{N/2} das Einfügen (Add-Funktion) entsprechender Kanäle bzw. Signale von den Leitungsendbaugruppen LE1 bis LE_{N/2} statt der Durchschaltefunktion ermöglichen.

Die Darstellung zeigt eine Störung der westlichen Leitungen, so daß dem Wellenlängen-Demultiplexer WDW das Protection-Signal zugeführt wird.

Der Ausgang des Wellenlängen-Multiplexers Ost WME ist zur Realisierung der Protection-Funktion über Protection-Schalter PSE2 und PSW mit einem Protection-Eingang des Leitungsmultiplexers MW verbindbar, was aber nicht dem dargestellten Störungsfall entspricht.

In derselben Weise sind die Ausgänge des Wellenlängen-Demultiplexers Ost WDE mit weiteren Schaltern CSE_{N/2}+1 bis CSE_{N} verbunden, die zum Durchschalten der Kanäle Kλ_{N/2+1} bis KλN bzw. zu deren Abzweigen (Drop-Funktion) dienen. Das Einfügen bzw. Durchschalten erfolgt mit weiteren Schaltern CSW_{N/2+1} bis CSW_{N} deren Ausgänge wiederum durch einen Wellenlängen-Multiplexer WMW zusammengefasst sind, dessen Ausgang über einen Protection-Schalter PSW2 mit dem Leitungs-Multiplexer West MW oder im dargestellten Störungsfall über diesen Schalter und den weiteren Protection-Schalter PSE mit dem Leitungs-Multiplexer ME verbunden ist. Über diesen Schalter wird das Protection-Signal in nicht betroffenen Terminals durchgeschaltet.

In derselben Weise wird über den Protection-Schalter PSE2 entweder bei ungestörtem Betrieb der östlichen Leitungen der Ausgang des Wellenlängen-Multiplexers Ost WME mit dem Leitungsmultiplexers ME verbunden oder bei Leitungsstörungen östlich des Terminals über den Protectionschalter PSE2 und einen weiteren Protection-Schalter PSW auf den Leitungs-Multiplexer-West MW geführt.

Die Stellungen der Protection-Schalter sind für Störungen beider Fasern L1 und L2 auf der Westseite dargestellt. In diesem Fall müssen sämtliche Verbindungen über die östlich an das Terminal angeschlossenen Lichtleitfasern abgewickelt werden. Das eigentlich in Richtung Westen auszusendende Wellenlängen-Multiplexsignal wird nun über den Protection-Schalter PSW2 und den Protection-Schalter PSE mit einem Eingang des Leitungs-Multiplexers Ost ME verbunden und als Protection-Signal PE über die erste Lichtleitfaser L1 ausgesendet.

Da der Leitungs-Demultiplexer West DW kein Signal empfangen kann, kann dieses nur über den östlichen Weg also über die zweite Lichtleitfaser L2 empfangen werden und als Protection-Signal über den Protection-Schalter PSE1 und PSW dem Wellenlängen-Demultiplexer West WDW zugeführt werden. Die Protection-Schalter PSE und PSW können auch als Teil des Koppelfeldes realisiert werden.

Auch Figur 5 ist ein funktionales Prinzipschaltbild. Bei einer Realisierung sind zusätzliche aber dem Fachmann vertraute Komponenten erforderlich.

## Patentansprüche

1. 2-Faser Ringnetz (L1, L2), mit einem ersten unidirektionalen Ring, der mit einer ersten Lichtleitfaser (L1) realisiert ist, mit einem zweiten unidirektionalen Ring, der mit einer zweiten Lichtleitfaser (L2) realisiert ist, mit mehreren Terminals (T1 bis T4) zum Abzweigen und Einfügen von Datenkanälen (Kλ1 bis KλN) und mit einer Protection-Umschaltung, die bei gestörten Working-Wellenlängenkanälen (WW, WE) auf Protection-Wellenlängenkanäle (PE, PW) umschaltet,
**dadurch gekennzeichnet,**
**daß** eine erste Gruppe der Datenkanäle (Kλ1 bis KλN/2) Working-Wellenlängenkanälen (WE) eines ersten Übertragungsbandes (λ1 bis λ_{N/2}) zugeordnet ist und in dem ersten unidirektionalen Ring übertragen wird, der in einer ersten Richtung jeweils zwei Terminals (T1, T3) über einen dieser Working-Wellenlängenkanäle (WE) duplexmäßig miteinander verbindet, wobei die Übertragung zwischen zwei Terminals (T1 und T3; T3 und T1) jeweils über die zwei von den Terminals (T1 und T3) gebildete Abschnitte der ersten Lichtleitfaser (L1)in der gleichen Richtung erfolgt,
**daß** eine zweite Gruppe der Datenkanäle (Kλ_{(N/2)+1} bis Kλ_{N}) Working-Wellenlängenkanälen (WW) eines zweiten Übertragungsbandes (λ_{(N/2)+1} bis λ_{N}) zugeordnet ist und in dem zweiten unidirektionalen Ring in entgegengesetzter Übertragungsrichtung zur ersten Richtung übertragen wird, der jeweils zwei Terminals über einen dieser Working-Wellenlängenkanäle (WW) duplexmäßig miteinander verbindet, wobei die Übertragung zwischen zwei Terminals jeweils über die zwei von diesen Terminals gebildete Abschnitte der zweiten Lichtleitfaser (L2) in der gleichen Richtung erfolgt und daß für eine Protection-Umschaltung optische Umschalter (PSW1, PSW2, PSE1, PSE2, PSW, PSE) zum Einfügen der bisherigen Working-Wellenlängenkanäle (WW, WE) als Protection-Wellenlängenkanäle (PE, PW) in die jeweils andere Lichtleitfaser (L1, L2) unter Beibehaltung aller Wellenlängen vorgesehen sind.

2. 2-Faser-Ringnetz nach Anspruch 1,
**dadurch gekennzeichnet,**
**daß** bereits bei einer Störung der Übertragung über eine Lichtleitfaser (L1) eine Protection-Umschaltung für beide Lichtleitfasern (L1, L2) des gestörten Abschnitts erfolgt.

3. 2-Faser-Ringnetz nach Anspruch 1,
**dadurch gekennzeichnet,**
**daß** für jeden Ring ein separates Koppelfeld (CC1, CC2) vorgesehen ist.

4. 2-Faser-Ring nach einem der vorhergehenden Ansprüche,
**dadurch gekennzeichnet,**
**daß** Leitungsmultiplexer (ME, ...) vorgesehen sind, die die Working-Wellenlängenkanäle (WEₛ, ..) und die Protection-Wellenlängenkanäle (PEₛ, ...) zu einem auszusendenden Multiplexsignal zusammenfassen, und daß Leitungsmultiplexer (DE, ...) vorgesehen sind, die empfangenen Working-Wellenlängenkanäle (WWₑ, ...) und die empfangenen Protection-Wellenlängenkanäle und (PWₛ, ...) voneinander trennen.

5. 2-Faser-Ring nach Anspruch 4,
**dadurch gekennzeichnet,**
**daß** Wellenlängen-Demultiplexer (WDW, WDE) vorgesehen sind, die Datenkanäle (Kλ1, ...) an das Koppelfeld (CC1, CC2) abgeben, daß Protection-Schalter (PSW1, PSE1, ...) vorgesehen sind, mit denen die Eingänge der Wellenlängen-Demultiplexer (WDW, WDE) mit einem der Ausgänge beider Leitungsmultiplexer (DE, DW) verbindbar sind, und
**daß** Wellenlängen-Multiplexer (WMW, WME) vorgesehen sind, denen vom Koppelfeld (CC1, CC2) Datenkanäle (Kλ1, ...) zugeführt werden, und daß weitere Protection-Schalter (PSW2, PSE2, ...) vorgesehen sind, mit denen die Ausgänge der Wellenlängen-Multiplexer (WMW, WME) mit einem der Eingänge beider Leitungsmultiplexer (MW, ME) verbindbar sind.

## Claims

1. 2-fibre ring network (L1, L2), having a first unidirectional ring which is implemented by means of a first optical fibre (L1), having a second unidirectional ring which is implemented by means of a second optical fibre (L2), having a plurality of terminals (T1 to T4) for dropping and adding data channels (Kλ1 to KλN), and having a protection switch which, in the event of faulty working wavelength channels (WW, WE), switches over to protection wavelength channels (PE, PW),
**characterised in that**
a first group of the data channels (Kλ1 to KλN/2) is assigned to working wavelength channels (WE) of a first transmission band (λ1 to λN/2) and is transmitted in the first unidirectional ring which in each case connects two terminals (T1, T3) to each other via one of said working wavelength channels (WE) in duplex fashion in a first direction, the transmission between two terminals (T1 and T3; T3 and T1) taking place in each case via the two sections of the first optical fibre (L1) that are formed by the terminals (T1 and T3) in the same direction,
that a second group of the data channels (Kλ(N/2)+1 to KλN) is assigned to working wavelength channels (WW) of a second transmission band (λ(N/2)+1 to λN) and is transmitted in the second unidirectional ring which in each case connects two terminals to each other via one of said working wavelength channels (WW) in duplex fashion in the opposite transmission direction to the first direction, and
that for the purposes of a protection switchover optical switches (PSW1, PSW2, PSE1, PSE2, PSW, PSE) are provided for inserting the former working wavelength channels (WW, WE) as protection wavelength channels (PE, PW) into the respective other optical fibre (L1, L2) while retaining all of the wavelengths.

2. 2-fibre ring network according to claim 1,
**characterised in that**
as soon as a fault occurs during transmission via one optical fibre (L1) a protection switchover is effected for both optical fibres (L1, L2) of the affected section.

3. 2-fibre ring network according to claim 1,
**characterised in that**
a separate switching matrix (CC1, CC2) is provided for each ring.

4. 2-fibre ring network according to one of the preceding claims,
**characterised in that**
line multiplexers (ME2, ...) are provided which combine the working wavelength channels (WEₛ, ..) and the protection wavelength channels (PEₛ, ..) to form a multiplex signal that is to be transmitted, and
that line multiplexers (DE, ...) are provided which separate the received working wavelength channels (WWₑ, ...) and the received protection wavelength channels (PWₛ, ...) from one another.

5. 2-fibre ring network according to claim 4,
**characterised in that**
wavelength demultiplexers (WDW, WDE) are provided which output data channels (Kλ1, ...) to the switching matrix (CC1, CC2), that protection switches (PSW1, PSE1, ...) are provided by means of which the inputs of the wavelength demultiplexers (WDW, WDE) can be connected to one of the outputs of the two line multiplexers (DE, DW), and
that wavelength multiplexers (WMW, WME) are provided to which data channels (Kλ1, ...) are supplied by the switching matrix (CC1, CC2), and
that further protection switches (PSW2, PSE2, ...) are provided by means of which the outputs of the wavelength multiplexers (WMW, WME) can be connected to one of the inputs of the two line multiplexers (MW, ME).

## Revendications

1. Réseau en anneau à deux fibres (L1, L2), comprenant un premier anneau unidirectionnel qui est réalisé au moyen d'une première fibre optique (L1), comprenant un deuxième anneau unidirectionnel qui est réalisé au moyen d'une deuxième fibre optique (L2), comprenant plusieurs terminaux (T1 à T4), pour la dérivation et l'insertion de canaux de données (Kλ1 à KλN) et comprenant une commutation de protection, qui, en cas de canaux de travail à longueur d'onde (WW, WE) perturbés, commute sur les canaux de protection à longueur d'onde (PE, PW),
**caractérisé en ce**
**qu'**un premier groupe de canaux de données (Kλ1 à KλN/2) est affecté à des canaux de travail à longueur d'onde (WE) d'une première bande de transmission (λ1 à λN/2) et est transmis dans le premier anneau unidirectionnel qui connecte en duplex, dans une première direction, respectivement deux terminaux (T1 T3) par l'intermédiaire de l'un de ces canaux de travail à longueur d'onde (WE), la transmission entre deux terminaux (T1 et T3 ; T3 et T1 ayant lieu respectivement dans la même direction par l'intermédiaire des deux sections de la première fibre optique (L1), formées par les terminaux (T1 et T3), en ce qu'un deuxième groupe de canaux de données (Kλ (N/2) + 1 à KλN) est affecté à des canaux de travail à longueur d'onde (WW) d'une deuxième bande de transmission (λ, (N/2) + 1 à λN) et est transmis dans le deuxième anneau unidirectionnel en direction de transmission inverse à la première direction, cet anneau connectant respectivement deux terminaux en duplex par l'intermédiaire de l'un de ces canaux de travail à longueur d'onde (WW), la transmission entre deux terminaux ayant lieu respectivement dans la même direction par l'intermédiaire des deux sections de la deuxième fibre optique (L2), formées par ces terminaux,
et en ce que des commutateurs optiques (PSW1, PSW2, PSE1, PSE2, PSW, PSE) sont prévus pour une commutation de protection pour insérer les canaux de travail à longueur d'onde (WW, WE), utilisés jusqu'à présent, en tant que canaux de protection à longueur d'onde (PE, PW) dans l'autre fibre optique respective (L1, L2) en conservant toutes les longueurs d'onde.

2. Réseau en anneau à deux fibres selon la revendication 1,
**caractérisé en ce**
**que** dès qu'il y a une perturbation de la transmission par l'intermédiaire d'une fibre optique, une commutation de protection a lieu pour les deux fibres optiques (L1, L2) de la section perturbée.

3. Réseau en anneau à deux fibres selon la revendication 1,
**caractérisé en ce**
**qu'**un champ de couplage séparé (CC1, CC2) est prévu pour chaque anneau.

4. Réseau en anneau à deux fibres selon l'une quelconque des revendications précédentes,
**caractérisé en ce**
**que** des multiplexeurs de ligne (ME, ...) sont prévus, ceux-ci regroupant les canaux de travail à longueur d'onde (WEₛ, ...) et les canaux de protection à longueur d'onde (PEₛ, ...) en un signal multiplexé à émettre, et
en ce que des multiplexeurs de ligne (DE, ...) sont prévus, ceux-ci séparant les canaux de travail à longueur d'onde reçus (WWₑ, ...) et les canaux de protection à longueur d'onde reçus (PWₛ, ...) les uns des autres.

5. Réseau en anneau à deux fibres selon la revendication 4,
**caractérisé en ce**
**que** des démultiplexeurs en répartition en longueur d'onde (WDW, WDE) sont prévus, ceux-ci donnant des canaux de données (Kλ1, ...) au champ de couplage (CC1, CC2), en ce que des commutateurs de protection (PSW1, PSE1, ...) sont prévus, au moyen desquels les entrées des démultiplexeurs à répartition en longueur d'onde (WDW, WDE) peuvent être connectées à l'une des sorties des deux multiplexeurs de ligne (DE, DW), et
en ce que des multiplexeurs à répartition en longueur d'onde (WMW, WME) sont prévus, auxquels des canaux de données (Kλ1, ...) sont amenés par le champ de couplage (CC1, CC2), et en ce que d'autres commutateurs de protection (PSW2, PSE2, ...) sont prévus, au moyen desquels les sorties des multiplexeurs à répartition en longueur d'onde (WMW, WME) peuvent être connectées à l'une des entrées des deux multiplexeurs de lignes (MW, ME).
